(19) Europäisches Patentamt
European Patent Office
Office européen des brevets

(11) **EP 1 871 063 A2**

(12) **EUROPEAN PATENT APPLICATION**

(43) Date of publication:
26.12.2007 Bulletin 2007/52

(51) Int Cl.:
*H04L 27/18* (2006.01)　　　*H04L 1/00* (2006.01)

(21) Application number: 07011600.9

(22) Date of filing: 13.06.2007

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **21.06.2006 CN 200610093109**

(71) Applicant: **NTT DoCoMo Inc.**
**Chiyoda-ku**
**Tokyo 100-6150 (JP)**

(72) Inventors:
• **Li, Anxin**
**Haidian District**
**Beijing, 100080 (CN)**

• **Wang, Mingshu**
**Haidian District**
**Beijing, 100080 (CN)**
• **Li, Xiangming**
**Haidian District**
**Beijing, 100080 (CN)**
• **Kayama, Hidetoshi**
**Haidian District**
**Beijing, 100080 (CN)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(54) **Data transmission with trellis coding**

(57)　　The present invention provides a data transmission method, including:
performing a serial-to-parallel conversion for input date stream, obtaining 4 parallel data streams and partitioning the 4 parallel data streams into 2 groups; performing trellis encoding for one group and selecting one basic codeword subset from all basic codeword subsets according to the trellis encoding output; performing trellis encoding for one data stream in the other group and selecting one phase subset from all phase subsets according to the trellis encoding output, and selecting a phase value from the selected phase subset according to another data stream in the other group; rotating the codeword selected from the basic codeword subset by the selected phase value and obtaining and transmitting an output codeword to a data receive-side. The present invention also discloses another data transmission method and two data transmission apparatuses.

Fig. 1

**Description**

**Field of the Invention**

The present invention relates to data transmission technology field, particularly to a data transmission method and apparatus which can be applied to a network adopting complementary code keying (CCK) technology.

**Background of the Invention**

The CCK technology is a kind of complementary code sequence based soft spreading technology with a flexible spreading factor. Since the complementary code sequence has many good features such as symmetry, good autocorrelation function and cross-correlation function and is an M-ary spreading sequence, the number of the complementary code sequence is far larger than that of the real spreading sequence when the both sequence have the same code length. Therefore, the CCK technology based on the complementary sequence can provide a higher data transmission rate and has a stronger anti-fading and anti-noise capability.

The CCK technology has obtained extensive interest because of its good features. Currently, the CCK technology has been adopted by the wireless LAN standard IEEE 802.11b and is highly probable to be used in a future mobile ubiquitous network.

The CCK technology adopted in the IEEE 802.11b standard utilizes a complementary code sequence with code-chip length of 8 and each code-chip can have four values, i.e. $\{\pm 1, \pm j\}$. We define the un-rotated complementary code sequences as the basic codeword set and the rotations of the basic code set as full codeword set. The basic codeword set adopted in the IEEE 802.11 b standard is the one composed of the complementary code sequences computed with formula (1).

$$f(\phi 1, \phi 2, \phi 3) = \{c_1, c_2, c_3, c_4, c_5, c_6, c_7, c_8\}$$
$$= \{e^{j(\phi 1+\phi 2+\phi 3)}, e^{j(\phi 2+\phi 3)}, e^{j(\phi 1+\phi 3)}, -e^{j(\phi 3)}, e^{j(\phi 1+\phi 2)}, e^{j(\phi 2)}, -e^{j(\phi 1)}, 1\} \quad (1)$$

$\phi 1$, $\phi 2$ and $\phi 3$ are input parameters. Since each of the three input parameters have 4 possible values, i.e. $\{0, \pi/2, \pi, 3\pi/2\}$, the basic codeword set includes $4 \times 4 \times 4 = 64$ codewords. This basic codeword set is hereinafter called CCK64.

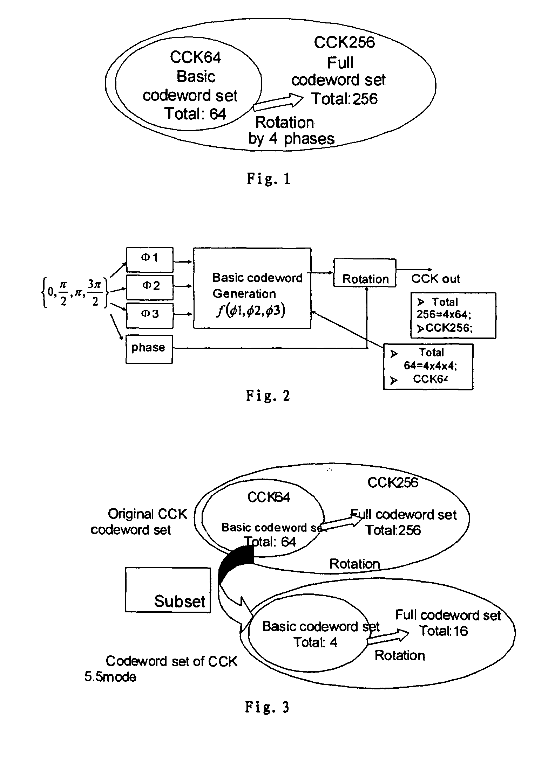

In order to get the full codeword set adopted in the IEEE 802.11b standard, each basic codeword in CCK64 needs to be rotated by phase. Since the phase has four possible values, i.e. $\{0, \pi/2, \pi, 3\pi/2\}$, the number of the codewords in the full codeword set is 4 times of that of CCK64, i.e. the full codeword set includes $4 \times 64 = 256$ codewords. The full codeword set is hereinafter called CCK256. Fig.1 shows the relation between CCK64 and CCK256. Fig.2 shows the codeword generation method for the two sets.

Based on the above basic codeword set and the full codeword set, the IEEE 802.11b standard provides two CCK transmission modes for realizing 5.5Mbps and 11 Mbps data transmissions respectively. These two modes will be simply called CCK 5.5Mbps mode and CCK 11Mbps mode and will be described in detail.

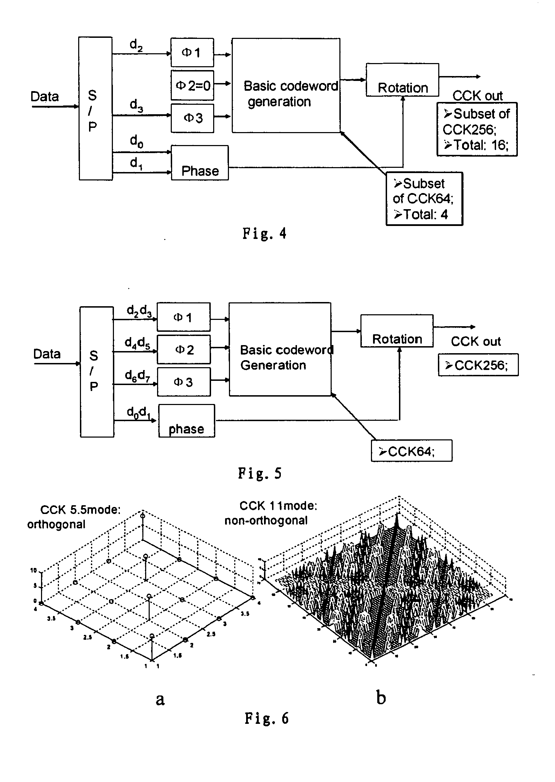

The CCK 5.5Mbps mode needs to get the final output codeword through a transmitter and these codewords belong to the full codeword set. The architecture of the transmitter is shown in Fig.4 and the specific working process is: firstly, serial-parallel conversion is performed for the input serial data stream and four parallel inputs $d_0$, $d_1$, $d_2$ and $d_3$ are obtained; secondly, $\phi 1$, $\phi 2$, $\phi 3$ are computed according to the formula (2) by using $d_2$ and $d_3$; thirdly, the phase value is obtained by referring to Table 1 with $d_0$ and $d_1$; fourthly, the basic codeword for the current transmission is computed according to the formula (1) by using the values of $\phi 1, \phi 2, \phi 3$; finally, the basic codeword is rotated by the phase value and the final output codeword is obtained.

$$\begin{cases} \phi 1 = (d_2 \times \pi) + \pi/2 \\ \phi 2 = 0 \\ \phi 3 = d_3 \times \pi \end{cases} \quad (2)$$

Table 1 Mapping from $d_0d_1$ to phase value

| $d_0d_1$ | phase |
|---|---|
| 00 | 0 |
| 01 | $\pi/2$ |
| 10 | $\pi$ |
| 11 | $3\pi/2$ |

In the CCK 5.5Mbps mode, the transmitter needs to compute the basic codewords for the current transmission according to the formula (1) by using the values of $\phi1,\phi2,\phi3$. Formula (2) shows there are 4 basic codewords, which compose the basic codeword set in the mode. The four basic codewords are rotated by four different phases and 16 codewords may thus be acquired. These 16 codewords compose the full codeword set in the mode. The basic codeword set and the full codeword set in this mode are subsets of CCK64 and CCK256 respectively and their relations are shown in Fig.3.

Fig.5 shows the architecture of the transmitter that obtains the final output codeword in CCK 11Mbps mode. The specific working process is: firstly, serial-parallel conversion is performed for the input serial data stream and eight parallel inputs $d_0{\sim}d_7$ are obtained; secondly, $d_0{\sim}d_7$ are partitioned into 4 groups, i.e. $d_0d_1$, $d_2d_3$, $d_4d_5$ and $d_6d_7$ and the values of phase, $\phi1$, $\phi2$ and $\phi3$ are obtained according to Table 2; thirdly, the basic codeword for the current transmission is computed according to the formula (1) by using the values of $\phi1$, $\phi2$, $\phi3$ ; finally, the basic codeword are rotated by the phase value and the final output codeword is obtained.

Table2 Mapping from parallel information bits to values of phase, $\phi1$, $\phi2$ and $\phi3$

| $d_id_{i+1}$ | phase or $\phi$ |
|---|---|
| 00 | 0 |
| 01 | $\pi/2$ |
| 10 | $\pi$ |
| 11 | $3\pi/2$ |

In the CCK 11Mbps mode, the transmitter needs to compute the basic codewords for the current transmission according to formula (1) by using the obtained values of $\phi1$, $\phi2$ and $\phi3$. Since each of $\phi1$, $\phi2$ and $\phi3$ can have 4 values, the number of the computed basic codewords is 64, i.e. the basic codeword set is CCK64. The 64 basic codewords are rotated by 4 different phases and 256 codewords are acquired, i.e. the full codeword set is CCK256.

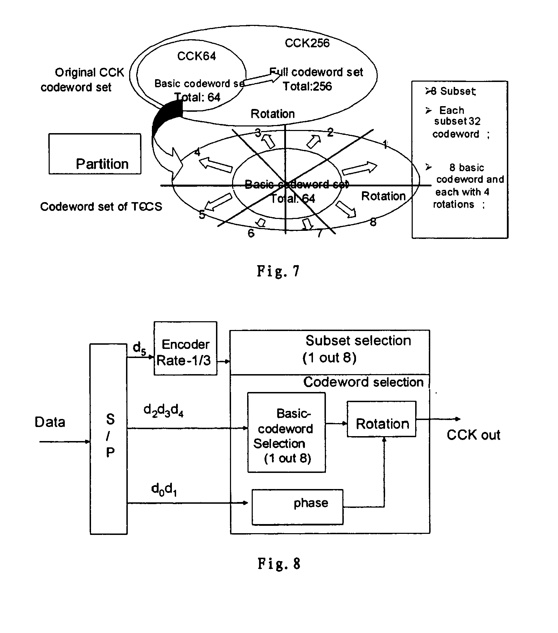

For the above two modes, the basic codeword set in the CCK 5.5Mbps mode is orthogonal, i.e. non-zero element only appears on the diagonal of the correlation matrix of the basic codewords while the basic codeword set in the CCK 11Mbps mode is not orthogonal, i.e. non-zero element appears not only on the diagonal of the correlation matrix of the basic codewords but also on other places of the correlation matrix. The correlation matrixes in the two modes are shown in Fig.6. Compared with the CCK 5.5Mbps mode, the system in the CCK 11Mbps mode has a shorter minimum Euclidean Distance because of the non-orthogonal characteristic of the basic codewords at the transmitter. The system minimum Euclidean Distance in the CCK 5.5Mbps mode is 16 while that in the CCK 11 Mbps mode is 8. The minimum Euclidean Distance determines the BER performance of the system, so the BER performance of the system in the CCK 11Mbps mode is far worse than that in the CCK 5.5Mbps mode.

In order to improve the performance in the CCK 11 Mbps mode, i.e. to reduce the BER of the system, Trellis coded CCK Spreading (TCCS) technique is proposed. The TCCS technology has two key ideas: the codeword set is orthogonally partitioned and the transmitter adopts a trellis coded spreading structure.

The codeword set partition is described first. The TCCS technology partitions the basic codeword set, i.e. CCK64, in the CCK 11 Mbps mode into 8 basic codeword subsets and each subset includes 8 orthogonal codewords. Each partitioned basic codeword subset is rotated by 4 different phases and the full codeword subset of the TCCS is acquired accordingly. Thus, the TCCS technology includes 8 full codeword subsets, each full codeword subset corresponds to a basic codeword subset and each basic codeword subset includes 8 orthgonal codewords. Therefore, each full codeword subset includes 32 codewords and the full codeword subset of the TCCS technology includes 256 codewords. The relations between the codeword set in the TCCS and that in the CCK 11Mbps mode are shown in Fig.7.

The transmitter with the trellis coded spreading structure is described next. The architecture of the transmitter is shown in Fig.8, which shows a classic trellis coded modulation structure, i.e. "trellis-coding + subset selection + selection of the codeword in the subset", is adopted when generating codewords. The workflow of the transmitter is: firstly, serial-parallel conversion is performed for the inputted serial data stream and three parallel data streams, i.e. $d_5$, $d_2d_3d_4$ and $d_0d_1$, are acquired; $d_5$ is trellis coded (convolution-coded) and a full codeword subset $\Psi$ is selected according to the encoder output; then the processing on the codewords according to $d_2d_3d_4$ and $d_0d_1$ is aiming at the codewords in the full codeword subset $\Psi$, specifically, a basic codeword is selected from the basic codeword subsets included in the $\Psi$ according to $d_2d_3d_4$ and one phase value is selected from $\{0,\pi/2,\pi,3\pi/2\}$ according to $d_0d_1$, and then the basic codeword selected according to $d_2d_3d_4$ is rotated by this phase value and the final output codeword is obtained.

The reasons why the TCCS mode can improve the system performance are: the basic codeword set is orthogonally partitioned and the codewords in each basic codeword subset are orthogonal, so the Euclidean Distance between codewords in the subset is larger than a set threshold; trellis-coding and CCK are combined, so correlation is introduced between codewords transmitted at different transmission time, which increases the Euclidean Distance between different transmission sequences. Since the transmitter has increased the system minimum Euclidean Distance, when the receive-side performs the sequence detection, the Euclidean Distance can be fully utilized by using Viterbi decoding algorithm, so that the system performance is improved and the BER is reduced.

However, compared with the CCK 11Mbps mode, although the TCCS mode can improve the system performance, the introduction of the trellis encoding reduces the data rate. For example, if the TCCS mode adopts trellis encoding with the encoding rate of 1/3, the data rate of the system will reduce to 8.25Mbps. Compared with the data rate of 11Mbps provided by the CCK 11Mbps mode, the data rate in the TCCS mode reduces 25%. The data rate can be computed according to formula (3).

$$datarate = \frac{6}{8} \times 11 Mbps = 8.25(Mbps) \qquad (3)$$

In addition, since the TCCS mode obtains the orthogonal basic codeword subset by partitioning basic codeword set while the basic codeword set in the CCK 5.5Mbps mode is already orthogonal, the TCCS mode cannot be applied to improve the performance in the CCK 5.5Mbps mode.

As described above, the current CCK 5.5Mbps mode and the CCK 11Mbps mode cannot achieve utmost system performance and although the TCCS mode can solve the problem of low performance in the CCK 11Mbps mode, it reduces the data rate of the system.

## Summary of the Invention

The present invention aims at providing a data transmission method for improving the system performance while keeping the data transmission rate.

The present invention also aims at providing a data transmission apparatus.

In order to solve the above problems, the present invention provides the following technical solutions:

According to an aspect of the present invention, a data transmission method of the present invention includes: pre-selecting 8 orthogonal basic codewords in which each basic codeword composes a basic codeword subset, and pre-setting corresponding relation between trellis encoding output and basic codeword subsets;

pre-setting 4 phase subsets such that each phase subset includes two different phase values and each phase subset is different from another, and pre-setting corresponding relation between trellis encoding output and phase subsets and that between parallel data streams obtained after serial-to-parallel conversion and phase values in the phase subsets;

during the data transmission, a data transmit-side performing a serial-to-parallel conversion for input date stream, obtaining 4 parallel data streams and partitioning the 4 parallel data streams into 2 groups;

performing trellis encoding for one group and selecting one basic codeword subset from all basic codeword subsets according to the encoding output and the preset corresponding relation; performing trellis encoding for one data stream in the other group, selecting one phase subset from all phase subsets according to the encoding output and the preset corresponding relation, and selecting one phase value from the selected phase subset according to another data stream in the other group and the preset corresponding relation; and

rotating the codeword selected from the basic codeword subset by the selected phase value and obtaining and transmitting an output codeword to a data receive-side.

According to an aspect of the present invention, the present invention provides a data transmission apparatus configured with 8 basic codeword subsets such that each basic codeword subset includes one basic codeword and all the basic codewords in the 8 basic codeword subsets are orthogonal, with corresponding relation between trellis encoding output and basic codeword subsets, 4 phase subsets such that each phase subset includes two different phase values and all the phase values are different, and with corresponding relation between trellis encoding output and phase subsets and that between parallel data streams obtained after serial-to-parallel conversion and phase values in the phase subset,

the apparatus comprising a transmitter with a data receiving module, a nested trellis encoding module and a codeword processing module, wherein,

the data receiving module is used to receive serial information, perform a serial-to-parallel conversion for the input serial information, obtain 4 parallel data streams, partition the 4 parallel data streams into 2 groups and transmit them to the nested trellis encoding module;

the nested trellis encoding module is used to receive the two groups, perform trellis encoding for one group and select one basic codeword subset from all basic codeword subsets according to the encoding output and the preset corresponding relation; perform trellis encoding for one data stream in the other group, select one phase subset from all phase subsets according to the encoding output and the preset corresponding relation, and select a phase value from the selected phase subset according to another data stream in the other group and the preset corresponding relation; and transmit the selected basic codeword subset and phase value to the codeword processing module;

the codeword processing module is used to rotate the codeword in the received basic codeword subset by the received phase value and obtain and transmit an output codeword to a data receive-side.

According to another aspect of the present invention, the present invention provides a data transmission method, including pre-setting a 4-value phase set;

pre-setting more than one codeword set such that each codeword set includes 256 codewords, all the codewords are different from each other and each codeword set can be partitioned into different basic codeword subsets, pre-setting corresponding relation between the codeword sets and trellis encoding output, that between the basic subsets obtained after the codeword set partition and the trellis encoding output and that between parallel data streams obtained after serial-to-parallel conversion and basic codewords in the basic codeword subsets;

during the data transmission, a data transmit-side performing a serial-to-parallel conversion for input serial data stream and obtaining 8 parallel data streams in which one data stream is considered as a first group and the other 7 data streams are considered as a second group;

performing trellis encoding for the first group and selecting one from all the codeword sets as current transmission codeword set according to the trellis encoding output and the preset corresponding relation; performing trellis encoding for two data streams in the second group, selecting one basic codeword subset from all the basic codeword subsets partitioned from the selected codeword set according to the trellis encoding output and the preset corresponding relation; selecting one basic codeword from the selected codeword subset according to three data streams in the remaining five in the second group and the preset corresponding relation; selecting one phase from the preset 4-value phase set according to last remaining two data streams in the second group and the preset corresponding relation;

rotating the selected basic codeword by the selected phase, obtaining and transmitting a output codeword to the data receive-side.

According to another aspect of the present invention, the present invention provides another data transmission apparatus configured with a 4-value phase set and more than one codeword set such that each codeword set includes 256 codewords, all the codewords are different from each other and each set can be partitioned into different basic codeword subsets, with corresponding relation between the codeword sets and trellis encoding output, and with corresponding relation between the basic subsets after the codeword set partition and the trellis encoding output and that between parallel data streams obtained after serial-to-parallel conversion and basic codewords in the basic codeword subsets;

the apparatus comprising a transmitter with a data receiving module, a nested trellis encoding module and a codeword processing module, wherein,

the data receiving module is used to receive serial information, perform a serial-to-parallel conversion for input serial information and obtain 8 parallel data streams in which one data stream is considered as a first group and the other 7 data streams are considered as a second group, and transmit them to the nested trellis encoding module;

the nested trellis encoding module is used to receive the two groups of data, perform trellis encoding for the first group and select one from all the codeword sets as the current transmission codeword set according to the trellis encoding output and the preset corresponding relation; perform trellis encoding for two data streams in the second group, select one basic codeword subset from all the basic codeword subsets partitioned from the selected codeword set according to the trellis encoding output and the preset corresponding relation; select one basic codeword from the selected codeword subset according to three data streams in the remaining five in the second group and the preset corresponding relation; select one phase from the preset 4-value phase set according to the last remaining two data streams in the second group and the preset corresponding relation; and transmit the selected basic codeword and the phase to the codeword processing module;

the codeword processing module is used to rotate the received codeword by the received phase value and obtain and transmit an output codeword to a data receive-side.

In order to verify the effectiveness of the solution of the present invention, the two proposed transmission solutions are implemented and simulated. The simulation results are compared with that of the transmission solution of the prior art.

The simulation scenario of the solution of the present invention is: a Rayleigh block fading channel is adopted, i.e. the channel response remains unchanged in each data packet and randomly changes on different data packets; the length of the MAC layer payload includes a data packet payload length and a control packet payload length, wherein the data packet payload length is 8000 bits and the control packet payload length is 160 bits; the packet structure same as that in the IEEE 802.11b standard is adopted, which includes a preamble, a physical layer packet header and a MAC layer payload, wherein the preamble is of 144 bits and the physical layer packet header is of 48 bits; simulations are performed to evaluate the packet error rate performance and spectrum efficiency.

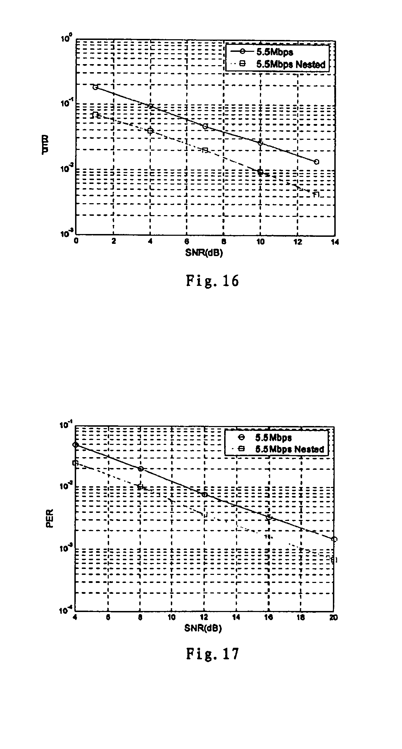

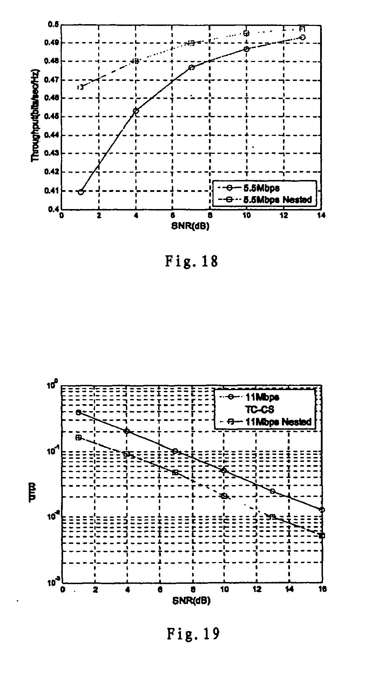

Fig.16 and Fig. 17 show simulation results of packet error rate performance in CCK 5.5Mbps mode in IEEE 802.11b standard and in a first solution of the present invention. Fig.16 compares the packet error rate performance of the data packets. The simulation results show the first solution of the present invention can obtain about 3~4dB performance gain, i.e. can obtain a better performance. Fig.17 compares the packet error rate performance of the control packets. The simulation results show the first solution of the present invention can also obtain about 3~4dB performance gain for the control packet.

Fig.18 shows simulation results of the spectrum efficiency in the CCK 5.5Mbps mode in IEEE 802.11b standard and in the first solution of the present invention. The simulation results show the first solution of the present invention can obtain higher spectrum efficiency. The relation between the spectrum efficiency and the data rate is shown in the following formula. Since the transmission bandwidth is determined by the chip rate and both transmission bandwidths for the CCK 5.5Mbps mode and the first solution of the present invention are 11 MHz, the higher the spectrum efficiency is, the higher the effective data rate of the system will have.

$$\text{spectrum } efficiency = \frac{data\ rate}{transmission\ bandwidth}$$

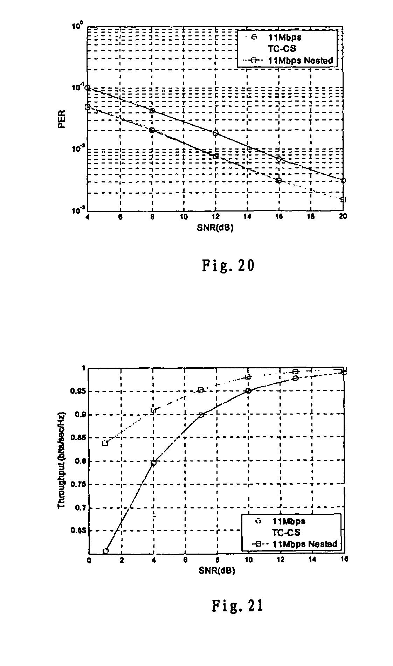

Fig. 19 and Fig.20 show simulation results of packet error rate performance in CCK 11Mbps mode in IEEE 802.11b standard, in TCCS mode and in a second solution of the present invention. Fig.19 compares the packet error rate performance of the data packets. Fig.20 compares the packet error rate performance of the control packets. The simulation results in Fig. 19 and Fig.20 show that compared with the CCK 11Mbps mode, the second solution of the present invention can obtain about 3~4dB performance gain and compared with the TCCS mode, the present invention can obtain a very similar performance.

Fig.21 shows simulation results of the spectrum efficiency in CCK 11Mbps mode in IEEE 802.11b standard, in TCCS mode and in the second solution of the present invention. The simulation results show the second solution of the present invention can obtain highest spectrum efficiency, which means the second solution of the present invention has the highest effective data rate.

**Brief Description of the Drawings**

Fig.1 shows relations between CCK64 and CCK256;

Fig.2 is a schematic diagram showing generation of a complementary codeword in the prior art;

Fig.3 is a schematic diagram showing a relation between a basic codeword set and a full codeword set in the prior CCK 5.5Mbps mode and CCK64 and a relation between a basic codeword set and a full codeword set in the CCK 5.5Mbps mode and CCK256;

Fig.4 is a schematic diagram showing an architecture of a transmitter adopted in the prior CCK 5.5Mbps mode;

Fig.5 is a schematic diagram showing an architecture of a transmitter adopted in the prior CCK 11Mbps mode;

Fig.6a is a schematic diagram showing a correlation matrix in the prior CCK 5.5Mbps mode;

Fig.6b is a schematic diagram showing a correlation matrix in the prior CCK 11 Mbps mode;

Fig.7 is a schematic diagram showing a relation between a basic codeword set and a full codeword set in the prior TCCS mode and CCK64 and a relation between a basic codeword set and a full codeword set in the prior TCCS mode and CCK256;

Fig.8 is a schematic diagram showing an architecture of a transmitter adopted in the prior TCCS mode;

Fig.9 is a schematic diagram showing a selection and partitioning of a basic codeword set in a first solution of the present invention;

Fig. 10 is a schematic diagram showing selection and partition of a phase set in the first solution according to an embodiment of the present invention;

Fig.11 is a schematic diagram showing an architecture of a transmitter adopted in the first solution according to an embodiment of the present invention;

Fig. 12A is a schematic diagram showing an outer codeword trellis in the first solution according to an embodiment of the present invention;

Fig. 12B is a schematic diagram showing an inner phase trellis in the first solution according to an embodiment of the present invention;

Fig. 13 is a schematic diagram showing trellises which are equivalent of the two trellises in Fig.12A and Fig.12B;

Fig. 14 is a schematic diagram showing an architecture of a transmitter adopted in a second solution according to an embodiment of the present invention;

Fig.15A is a schematic diagram showing an outer codeword trellis in the second solution according to an embodiment of the present invention;

Fig. 15B is a schematic diagram showing an inner phase trellis in the second solution according to an embodiment of the present invention;

Fig.16 is a schematic diagram showing a comparison of a packet error rate performance for data packets between the CCK 5.5Mbps mode and the first solution according to an embodiment of the present invention;

Fig. 17 is a schematic diagram showing a comparison of a packet error rate performance for control packets between the CCK 5.5Mbps mode and the first solution according to an embodiment of the present invention;

Fig. 18 is a schematic diagram showing a comparison of a spectrum efficiency performance for data packets between the CCK 5.5Mbps mode and the first solution according to an embodiment of the present invention;

Fig. 19 is a schematic diagram showing a comparison of a packet error rate performance for data packets among the CCK 11Mbps mode, the TCCS mode and the second solution according to an embodiment of the present invention;

Fig.20 is a schematic diagram showing a comparison of a packet error rate performance for control packets among the CCK 11Mbps mode, the TCCS mode and the second solution according to an embodiment of the present invention;

Fig.21 is a schematic diagram showing a comparison of a spectrum efficiency performance for data packets among the CCK 11Mbps mode, the TCCS mode and the second solution according to an embodiment of the present invention;

## Detailed Description of the Invention

Formula (4) shows the minimum Euclidean Distance of the codewords used in the CCK 5.5Mbps mode in the IEEE 802.1 1b standard is 16 and this distance is system Euclidean Distance. The length of the complementary codeword sequence in the CCK 5.5Mbps mode is 8. Formula (5) shows the Euclidean Distance of the complementary code sequence with the length of 8 can reach at most 32. Therefore, the Euclidean Distance of the codeword set in the CCK 5.5Mbps mode hasn't reached the maximum value as it can.

$$d_E^2 = \min_{i,j=1,\ldots,16} \left\| cck_i - cck_j \right\|^2 = 16 \qquad (4)$$

$$seq_1 = \{1 \quad 1 \quad 1 \quad 1 \quad 1 \quad 1 \quad 1 \quad 1\}$$
$$seq_2 = \{-1 \quad -1 \quad -1 \quad -1 \quad -1 \quad -1 \quad -1 \quad -1\} \qquad (5)$$
$$d_E^2 = \left\| seq_1 - seq_2 \right\|^2 = \sum_{i=1}^{8} \left| 1 - (-1) \right|^2 = 32$$

Therefore, the main idea of the first solution according to an embodiment is: increasing the Euclidean Distance by designing new transmission solution at the transmit-side and detecting method with Viterbi algorithm at the receive-side so as to improve the performance of the system with a data rate of 5.5Mbps. According to the characteristics of the Euclidean Distance, the Euclidean Distance of codewords can be enlarged by introducing negative correlation between codewords.

Next the first solution according to an embodiment will be described in detail with reference to the drawings and embodiments.

In order to guarantee the system Euclidean Distance reaches 32, it is necessary to in advance select and partition reasonably a basic codeword subset and a phase subset.

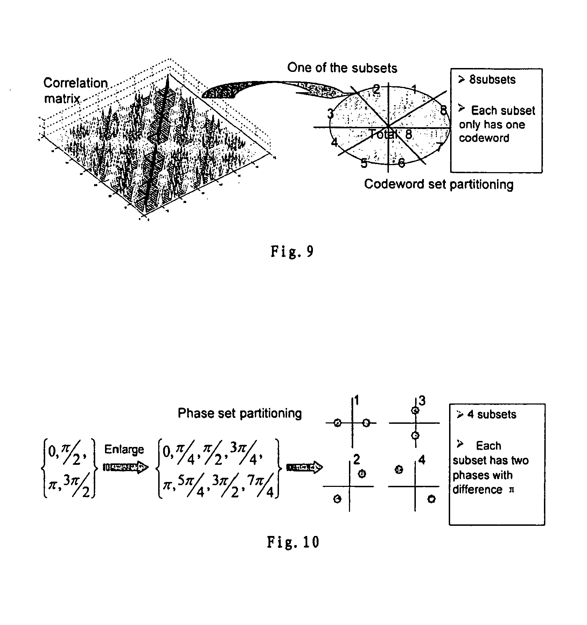

For the basic codeword subset, 8 orthogonal basic codewords need to be selected and each basic codeword composes a basic codeword subset. A method for selecting and partitioning the basic codeword subset is proposed as follows: firstly, 8 orthogonal basic codewords are selected from CCK64 and the 8 basic codewords compose a set. There are several methods for selection of the 8 orthogonal basic codewords from CCK64. For example, CCK64 may be partitioned into 8 codewords sets and each codeword set has 8 orthogonal basic codewords. Any of the 8 codeword sets can be selected as the basic codeword set for the proposed method. The selected codeword set can be further partitioned into 8 basic codeword subsets. Each basic codeword subset only includes one codeword as shown in Fig. 9. Since all the codewords in different codeword sub sets are orthogonal, the minimum Euclidean Distance between different codeword subsets is not less than 16. After getting the 8 basic codeword subsets, it is necessary to set corresponding relation between the 8 basic codeword subsets and the trellis encoding output of the encoder so that the transmitter can select a basic codeword subset according to the output of the encoder. This process can enlarge the Euclidean Distance between output branches stemming from the same start state on the trellis.

For the phase subset, 4 phase subsets need to be set such that each phase subset includes two different phase values and is different from another. This process can enlarge the Euclidean Distance between parallel branches. A method for selecting and partitioning the phase subset is proposed as follows: the prior CCK 5.5Mbps mode adopts a phase set with four values, i.e. $\{0,\pi/2,\pi,3\pi/2\}$, while the present embodiment changes the set as a phase set with 8 values, for example $\{0,\pi/4,\pi,\pi/2,3\pi/4,\pi,5\pi/4,3\pi/2,7\pi/4\}$, and then the 8-value phase set is partitioned into 4 subsets such that each subset includes 2 phase values and the difference between the two phase values should be $\pi$, as shown in Fig. 10. The phase set can be the one with other phase values as long as each subset is different from another, each can be partitioned into 4 subsets and the two phase values in each subset are different. If the difference between the two phase values in each subset can reach $\pi$, since rotating the same codeword by two phases with the difference of $\pi$ can get two codewords with largest negative correlation and the Euclidean Distance between the codewords with negative correlation is larger than that between the codewords with positive correlation or without correlation, this process can further enlarge the Euclidean Distance between parallel branches. After getting the 4 phase subsets, it is necessary to set corresponding relation between the 4 phase subsets and the encoder output so that the transmitter can select a phase subset according to the trellis encoding output of the encoder. It is also necessary to set corresponding relation between the phase values in the phase subset and the parallel data streams obtained after the serial-to-parallel conversion so that the transmitter can select a phase value according to the parallel data streams.

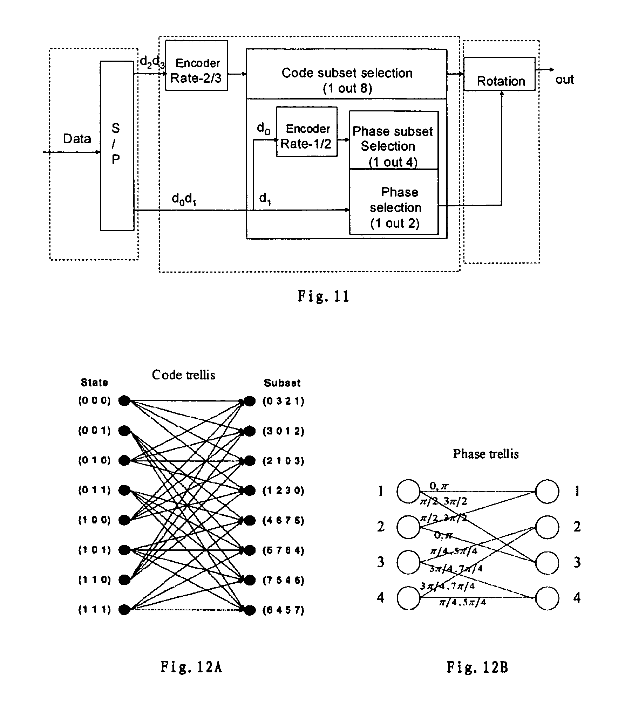

In order to make full use of partitioning the basic codeword set and the phase set, the first solution also designs the architecture of a nested TCCK transmitter, as shown in Fig. 11. This transmitter may include an inner trellis encoding structure and an outer trellis encoding structure, wherein the inner trellis encoding structure is for phase selection and the outer trellis encoding structure is for basic codeword selection.

The processing flow of the transmitter at the data transmit-side will be described in detail:

In step A, the transmitter performs a serial-to-parallel conversion for the input serial data stream and obtains 4 parallel data streams, wherein $d_0d_1$ is a group and $d_2d_3$ is a group.

In step B, $d_2d_3$ are trellis encoded and one basic codeword subset $\Psi$ is selected according to the encoder output and the previously set corresponding relation between the basic codeword subsets and the encoder output.

Since each basic codeword subset only includes one basic codeword, when one basic codeword subset is selected, the basic codeword is selected.

Since the basic codeword subsets transmitted at different time are determined by the coded output of $d_2d_3$ and the trellis encoder state at that time, codewords transmitted at different time are correlated. This correlation can enlarge the Euclidean Distance between codeword sequences.

In step C, $d_0$ is trellis coded and one phase subset $\Theta$ is selected according to the output of the encoder and the previously set corresponding relation between the phase subsets and the encoder output.

In step D, one phase value is selected from the selected phase subset $\Theta$ according to $d_1$, and the previously set corresponding relation between the parallel data streams and the phase values.

In step E, the basic codeword in the basic codeword subset $\Psi$ selected in step B is rotated by the phase value selected in step D and the final output codeword is obtained and transmitted to the data receive-side.

As shown in Fig. 11, the transmitter can realize the above processing through a data receiving module, a nested trellis encoding module and a codeword processing module. Specifically, these modules perform the following processing respectively:

The data receiving module is used to receive serial data stream, perform a serial-to-parallel conversion for the input serial data stream, obtain 4 parallel data streams, partition the 4 parallel data streams into 2 groups and transmit them to the nested trellis encoding module.

The nested trellis encoding module is used to receive the two data groups; perform trellis encoding for one data group and select one basic codeword subset from all basic codeword subsets according to the output of the trellis encoder and the preset corresponding relation; perform trellis encoding for one data in the other group and select one phase subset from all phase subsets according to the output of the trellis encoder and the preset corresponding relation, and then select one phase value from the selected phase subset according to another data in this group and the preset corresponding relation; and transmit the selected basic codeword subset and phase value to the codeword processing module.

The codeword processing module is used to rotate the codeword in the received basic codeword subset by the received phase value, obtain an output codeword and transmit the output codeword to the data receive-side.

Fig. 11 shows the nested trellis encoding module which may also include an outer trellis encoding module and an inner trellis encoding module.

The outer trellis encoding module is used to receive one data group from the data receiving module, perform the trellis encoding for the data group, select one basic codeword subset from all the basic codeword subsets according to the trellis encoding output and the preset corresponding relation and output the selected basic codeword subsets to the codeword processing module.

The inner trellis encoding module is used to receive the other data group from the data receiving module, perform trellis encoding for one data in this group, select one phase subset from all phase subsets according to the trellis encoding output and the preset corresponding relation, and then select a phase value from the selected phase subset according to another data in this group and the preset corresponding relation. The inner trellis encoding module is also used to transmit the selected phase value to the codeword processing module.

After the data receive-side receives the output codeword from the data transmitter, it detects the codeword with Viterbi algorithm. Since the Viterbi algorithm only can only be applied to single trellis detection while the codeword and phase in the first solution according to an embodiment correspond to two trellises, the receive-side needs to obtain a single equivalent trellis from the two nested trellises before the detection.

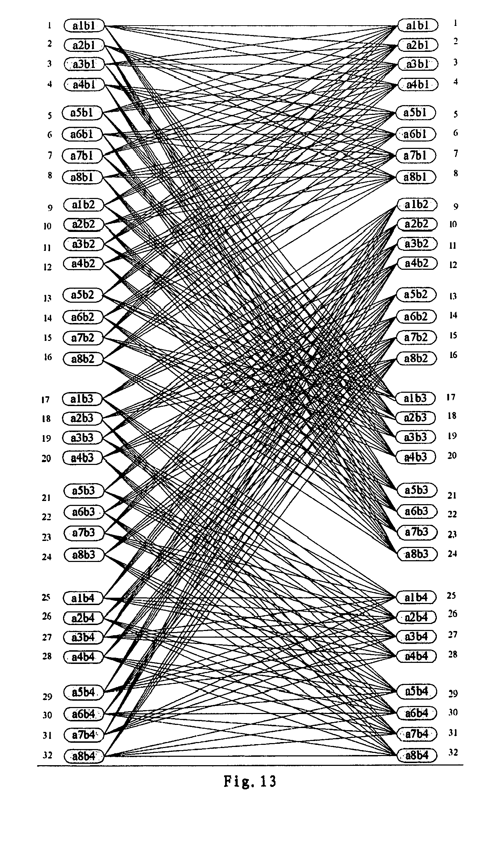

Specifically, the two trellises corresponding to the codeword and phase in the present solution are shown in Fig. 12. The outer codeword trellis is an 8-states trellis and the number of the parallel branch is 1, i.e. each line represents one branch; the inner phase trellis is a 4-states trellis and the number of the parallel branches is 2. The receive-side in the first solution combines the two trellises and indicates the combined trellises as an equivalent virtual trellis, i.e. 1) the states of the equivalent virtual trellis can represent all possible state combination of two trellises, 2) the branches of the equivalent virtual trellis can represent all the possible state-transitions occurring in the two trellises. Specifically, letter a represents the state of the outer codeword trellis, b represents the state of the inner phase trellis and the combination of a and b represents the state of the equivalent trellis. Then all the states that may have a state transition are connected with branches and the equivalent trellis is thus acquired. The equivalent trellis is shown in Fig. 13, which includes 32 states and 2 parallel branches for each state-transition.

The Viterbi algorithm can be used to detect the signal based on the equivalent trellis shown in Fig. 13.

In addition, in the equivalent trellis shown in Fig. 13, the computation for the total number of the branches is shown in formula (6):

$$(number-of-states) \times (number-of-states-can-be-transited-from$$
$$-each-state) \times (number-of-parallel-branches) = 32 \times 8 \times 2 = 512$$

$$(6)$$

The computation result of formula (6) shows when Viterbi algorithm is used for detection, the branch measurements of 512 branches need to be calculated and the computational complexity is very high. Actually, there are only 8 basic codewords and 8 phase values in this solution so the total number of the codewords is $8 \times 8 = 64$. In other words, when Viterbi algorithm is used for detection, the branch measurements of only 64 branches need to be computed and the branch measurements of the other 512 - 64 = 448 branches don't need to be computed. The branch measurements of the rest 448 branches can be obtained directly through the branch measurements of the above 64 branches. Thus, the data receive-side in the first solution can further identify the 64 branches to be computed and only carries out the branch measurements of the 64 branches since the rest can be obtained directly through the branch measurements of the 64 branches so that the computation complexity can be reduced greatly when Viterbi algorithm is used for detection.

The minimum Euclidean Distance in the first solution can be computed based on the trellis. The minimum Euclidean Distance equals to the minor one between the "minimum Euclidean Distance between parallel branches" and the "minimum Euclidean Distance between paths". The minimum Euclidean Distance between parallel branches refers to the minimum Euclidean Distance between different branches originating from the same starting state and reaching the same destination state; the "minimum Euclidean Distance between paths" refers to the minimum Euclidean Distance between different paths originating from the same starting state and reaching the same destination state. In the first solution, the minimum Euclidean Distance between parallel branches and between paths in the trellis are both 32, so the minimum Euclidean Distance in the first solution is 32. Compared with the minimum Euclidean Distance of 16 in the prior CCK 5.5Mbps mode, the minimum Euclidean Distance in the first solution is doubled.

Since both the CCK 5.5Mbps mode and the first solution output one CCK codeword after inputting 4 bits. Therefore, the first solution can enlarge the Euclidean Distance while remain the data rate. The reason why the first solution can remain the data rate is that the codeword set is enlarged. For example, the codeword set in the CCK5.5Mbps mode includes 16 codewords and that in the first solution includes 64 codewords. The enlargement of the codeword set compensates the decrease of the data rate due to redundancy introduced by the trellis encoding.

The first solution achieves data rate of 5.5Mbps and enlarges the minimum Euclidean Distance so that the system performance is improved. The second solution according to an embodiment of the present invention will be described next, which enlarges the minimum Euclidean Distance while achieving data rate of 11Mbps.

The analysis on the reason why the TCCS technology reduces the data rate shows the TCCS technology introduces the trellis encoding affecting the data rate and the adopted full codeword set only includes 256 codewords. Since enlarging the codeword set can make the amount of the information carried by the codeword larger, the data rate can be increased. Therefore the second solution proposes to enlarge the codeword set and adopt the nested TCCK mode. The detail process of the second solution will be described in detail as follows.

The phase set in the second solution still adopts the 4-value phase set in the CCK 11Mbps mode, i.e. $\{0,\pi/2, \pi,3\pi/2\}$. The second solution needs to design more than one codeword set, wherein each codeword set needs to include 256 codewords, the 256 codewords in one set are different from each other, and each set can be partitioned as the basic codeword partition shown in Fig.7. In other words, each partitioned set includes one basic codeword set and the basic codeword set includes 64 codewords. The 64 codewords can be partitioned into 8 subsets and each subset includes 8 orthogonal codewords. Specifically, 4 codeword sets can be designed, i.e. $G_0,G_1,G_2,G_3$.

As long as the above requirements are satisfied, any method can be used to acquire the above codewords. The second solution proposes a design scheme which computes the required codeword according to formula (7) and generates 4 codeword sets according to formula (8).

$$\begin{aligned} \mathrm{code} &= \{c_1,c_2,c_3,c_4,c_5,c_6,c_7,c_8\} \\ &= e^{j\times phase}\{e^{j(\phi 1+\phi 2+\phi 3)},e^{j(\phi 2+\phi 3)},e^{j(\phi 1+\phi 3)},-e^{j(\phi 3)},e^{j(\phi 1+\phi 2)},\ e^{j(\phi 2)},-e^{j(\phi 1)},\ 1\} \end{aligned} \quad (7)$$

$$\begin{aligned} G_0 &= \{c_1 \quad c_2 \quad c_3 \quad c_4 \quad c_5 \quad c_6 \quad c_7 \quad c_8\} \\ G_3 &= \{c_1 \quad c_2 \quad c_3 \quad -c_4 \quad c_5 \quad -c_6 \quad -c_7 \quad -c_8\} \\ G_1 &= \{c_1 \quad c_2 \quad c_3 \quad -c_4 \quad c_5 \quad c_6 \quad -c_7 \quad c_8\} \\ G_2 &= \{c_1 \quad c_2 \quad c_3 \quad c_4 \quad c_5 \quad -c_6 \quad c_7 \quad -c_8\} \end{aligned} \quad (8)$$

Moreover, the corresponding relation between the codeword sets and the trellis encoding output of the encoder needs to be set so that the transmitter can select one codeword set according to the encoder output; the corresponding relation between the trellis encoding output of the encoder and the basic codeword subsets obtained through partitioning the codeword sets needs to be set so that the transmitter can select one basic codeword set according to the encoder output; the corresponding relation between the parallel data streams obtained after the serial-to-parallel conversion and the basic codewords in the basic codeword subsets needs to be set. The corresponding relation between the parallel data streams obtained after the serial-to-parallel conversion and the phase values needs to be set too.

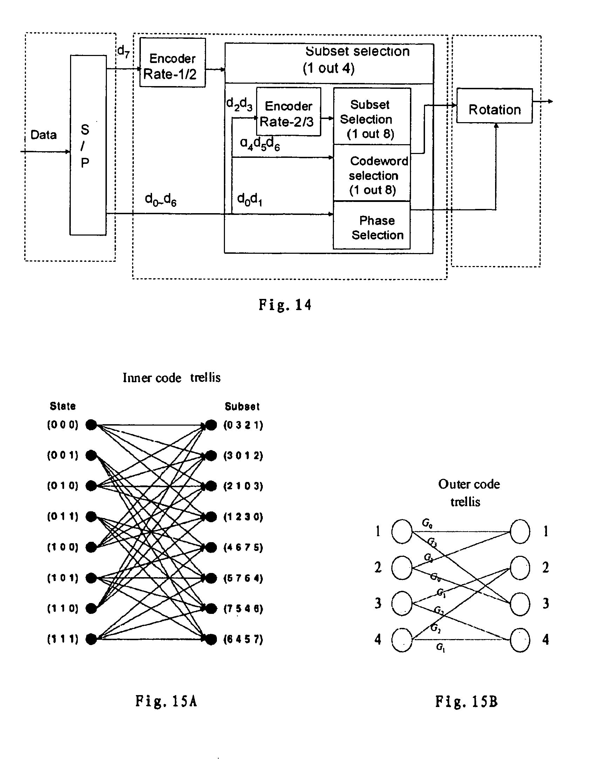

The second solution also designs an architecture of a nested TCCK transmitter, as shown in Fig.14. This transmitter may include an inner trellis encoding structure and an outer trellis encoding structure, wherein the outer trellis encoding structure is used to select the designed codeword sets $G_0$, $G_1$, $G_2$, $G_3$ and the inner trellis encoding structure is used to select a codeword in the codeword set.

The processing flow of the transmitter will be described in detail:

In step A, the data transmitter performs a serial-to-parallel conversion for input serial data stream and obtains 8 parallel data streams in which $d_7$ is considered as a group and $d_0 \sim d_6$ are considered as another group.

In step B, $d_7$ is trellis coded and one codeword set is selected as a current transmission codeword set $\Psi$ from all codeword sets according to the encoder output and the previously preset corresponding relation between the codeword sets and the encoder output.

When the codeword set is selected, the subsequent processing is performed in the codeword set $\Psi$.

In step C, $d_2d_3$ in $d_0 \sim d_6$ are trellis coded and one basic codeword subset $\Xi$ is selected from the codeword set $\Psi$ according to the encoder output and the previously preset corresponding relation between the basic codeword subsets and the encoder output; one basic codeword is selected from the basic codeword subset $\Xi$ according to $d_4d_5d_6$ and the previously preset corresponding relation between the basic codewords and the parallel data streams; and one phase is selected from the phase set $\{0, \pi/2, \pi, 3\pi/2\}$ according to $d_0d_1$ and the previously preset corresponding relation between the phases and the parallel data streams.

In step D, the basic codeword selected in step C is rotated by the phase selected in step C and the final output codeword is obtained and transmitted to the data receive-side.

As shown in Fig. 14, the transmitter can realize the above processing through a data receiving module, a nested trellis encoding module and a codeword processing module. Specifically, these modules perform the following processing respectively:

The data receiving module is used to receive serial data stream, perform a serial-to-parallel conversion for the input serial data stream, obtain 8 parallel data streams in which one data stream is considered as a first data group and the other 7 data streams are considered as a second data group, and transmit the two data groups to the nested trellis encoding module.

The nested trellis encoding module is used to receive the two data groups; perform trellis encoding for the first data group and select one from all the codeword sets as the current transmission codeword set according to the encoding output and the previously preset corresponding relation; perform the trellis encoding for two data streams in the second group, according to the encoding output and the preset corresponding relation select one basic codeword subset from all the basic codeword subsets partitioned from the selected codeword set; select one basic codeword from the selected codeword set according to three of the remaining five data streams in the second group and the preset corresponding relation; select one phase from the set 4-value phase set according to the remaining two data streams in the second group and the preset corresponding relation; and transmit the selected basic codeword and phase to the codeword processing module.

The codeword processing module is used to rotate the received codeword by the received phase value, obtain an output codeword and transmit the output codeword to the data receive-side.

Fig. 14 shows the nested trellis encoding module may also include an outer trellis encoding module and an inner trellis encoding module.

The outer trellis encoding module is used to receive the first group data from the data receiving module, select one codeword set from all the codeword sets as the current transmission codeword set according to the encoding output and previously preset corresponding relation and transmit the selected codeword set to the inner trellis encoding module.

The inner trellis encoding module is used to receive the second data group from the data receiving module and the codeword set from the outer trellis encoding module; perform the trellis encoding for two data streams in the second group, according to the encoding output and preset corresponding relation select one basic codeword subset from all the basic codeword subsets partitioned from the selected codeword set; select one basic codeword from the selected codeword set according to three data streams in the remaining five in the second group and the preset corresponding relation; select one phase from the set 4-value phase set according to the last remaining two data streams in the second group and the preset corresponding relation; and output the selected phase and basic codeword to the codeword processing module.

After the data receive-side receives the output codeword from the data transmitter, it detects the codewords with the Viterbi algorithm. Similar with the first solution, since the Viterbi algorithm only adapts to single trellis detection, while the second solution has two nested trellises, i.e. an outer codeword trellis and an inner codeword trellis, the receive-side needs to perform equivalence for the nested trellises before detection.

Specifically, the outer codeword trellis and the inner codeword trellis are shown in Fig.15. The outer codeword trellis is an 8-states trellis and the number of the parallel branches is 32, i.e. each line represents 32 parallel branches. The inner codeword trellis is a 4-states trellis and the number of the parallel branch is 1. In order to detect the received signal with Viterbi algorithm, the receive-side in the second solution needs to indicate the two trellises as an equivalent virtual trellis, i.e. 1) the states of the equivalent virtual trellis can represent all possible states in the two trellises; 2) the branches of the equivalent virtual trellis can represent all possible state transitions which occur in the two trellises. Specifically, letter a represents the state of the outer codeword trellis, b represents the state of the inner phase trellis and the combination of a and b represents the state of the equivalent trellis. Then all the states that may have a state transition are connected with branches and the equivalent trellis is thus obtained. The equivalent trellis is shown in Fig. 13, which includes 32 states and 32 parallel branches, i.e. each line in Fig. 13 represents 32 parallel branches.

The Viterbi algorithm may be used to detect the signal based on the equivalent trellis shown in Fig. 13.

Moreover there is also the problem of large computation amount in the equivalent trellis in the second solution. The computation result of formula (9) shows when Viterbi algorithm is used for detection, the branch measurements of the 8192 branches need to be computed and the computational complexity is very high.

$$(number-of-states)\times(number-of-states-can-be-transited-from \\ -each-state)\times(number-of-parallel-branches)=32\times8\times32=8192 \quad (9)$$

In fact, the number of the codeword sets in the solution is 4 and each set has 256 codewords so the total number of the codewords is $4\times256 = 1024$. Obviously, there are a lot of repeating branches among the 8129 branches, i.e. a lot of branches correspond to the same codeword. This characteristic can be used to reduce the complexity. For example, when Viterbi algorithm is used for detection, the branch measurements of only 1024 branches need to be computed while the branch measurements of the other 8192 - 1024 = 7168 branches don't need to be computed since they can be obtained directly. Thus, the second solution can further identify 1024 branches to be computed and only computes the branch measurements of 1024 branches so that the computational complexity can be reduced greatly when Viterbi algorithm is used for detection.

The minimum Euclidean Distance in the second solution can be computed based on the trellis. The minimum Euclidean Distance is the minor one between the "minimum Euclidean Distance between parallel branches" and the "minimum Euclidean Distance between paths" in the trellis. In the second solution, the minimum Euclidean Distance between parallel branches and between paths are both 16, so the minimum Euclidean Distance in the second solution is 16. Compared with the minimum Euclidean Distance of 8 in the CCK 11Mbps mode, the minimum Euclidean Distance in the second solution is doubled.

The second solution can increase the minimum Euclidean Distance and keep the data rate at the same time. Fig.8 shows the TCCS mode outputs one CCK codeword after inputting every 6 bits, Fig.5 shows the prior CCK 11Mbps mode outputs one CCK codeword after inputting every 8 bits and Fig. 14 shows the second solution also outputs one CCK codeword after inputting every 8 bits. Therefore the TCCS mode reduces the data rate while the second solution doesn't reduce the data rate. The reason why the second solution can keep the data rate is that the codeword set is enlarged. For example, the codeword sets in the CCK 11Mbps mode and in the TCCS mode both include 256 codewords and the codeword set in the second solution includes 1024 codewords. The enlargement of the codeword set compensates the decrease of the data rate due to redundancy introduced by the trellis encoding.

Table 3 compares the Euclidean Distance among the first solution, the second solution according to an embodiment and the transmission solution of the prior art. Table 3 shows the two solutions according to an embodiment of the present invention enlarge the minimum Euclidean Distance.

Table 3 comparison of minimum Euclidean Distance

|  | 5.5Mbps | 11Mbps |
|---|---|---|
| IEEE 802.11b | 16 | 8 |
| TCCS | - | 16 |
| Present solution | 32 | 16 |

The above are only preferred embodiments of the present invention and don't intend to limit the scope of the present invention.

**Claims**

1. A data transmission method, comprising:

   pre-selecting 8 orthogonal basic codewords in which each basic codeword composes a basic codeword subset, and pre-setting corresponding relation between trellis encoding output and basic codeword subsets;
   pre-setting 4 phase subsets such that each phase subset comprises two different phase values and each phase subset is different from another, and pre-setting corresponding relation between trellis encoding output and phase subsets and that between parallel data streams obtained after serial-to-parallel conversion and phase values in the phase subsets;
   during the data transmission, a data transmit-side performing a serial-to-parallel conversion for input information, obtaining 4 parallel data streams and partitioning the 4 parallel data streams into 2 groups;
   performing trellis encoding for one group and selecting one basic codeword subset from all basic codeword subsets according to the encoding output and the preset corresponding relation; performing trellis encoding for one data stream in the other group, selecting one phase subset from all phase subsets according to the encoding output and the preset corresponding relation, and selecting one phase value from the selected phase subset according to another data stream in the other group and the preset corresponding relation; and
   rotating the codeword selected from the basic codeword subset by the selected phase value and obtaining and transmitting an output codeword to a data receive-side.

2. The method according to claim 1, wherein the 8 selected orthogonal basic codewords are selected arbitrarily from CCK 64.

3. The method according to claim 1, wherein the selection of the 8 orthogonal basic codewords comprises: partitioning CCK 64 into 8 subsets, selecting one subset from the 8 partitioned subsets, and partitioning the 8 basic codewords in the subset into 8 basic codeword subsets.

4. The method according to claim 1, wherein the pre-setting of the 4 phase subsets comprises: setting an 8-value phase set such that phase values in the phase set are different from each other, then partitioning the phase set and obtaining 4 phase subsets.

5. The method according to claim 1 or claim 4, wherein a difference between two phase values in each phase subset is $\pi$.

6. The method according to claim 4, wherein the 8-value phase set is $\{0, \pi/4, \pi-, \pi/2, 3\pi/4, \pi, 5\pi/4, 3\pi/2, 7\pi/4\}$

7. The method according to claim 1, wherein the method further comprises:

   at the data receive-side, trellises of the codeword and the phase being equivalent as a virtual trellis and detecting the received codewords according to Viterbi algorithm based on the equivalent virtual trellis, wherein states in the equivalent virtual trellis can represent combination of all the states of the trellises of the codeword and the phase and branches in the equivalent virtual trellis can represent all state-transitions of the trellises of the codeword and the phase.

8. The method according to claim 7, wherein the detection step comprises:

   computing and obtaining branch measurements of all the branches in the equivalent virtual trellis; and
   the equivalence and detection step further comprises: identifying 64 branches to be computed in the equivalent virtual trellis, only computing the measurements of the 64 branches, and then obtaining measurements of the other branches according to the measurements of the 64 branches.

9. A data transmission apparatus configured with 8 basic codeword subsets such that each basic codeword subset comprises one basic codeword and all the basic codewords in the 8 basic codeword subsets are orthogonal, with corresponding relation between trellis encoding output and basic codeword subsets, 4 phase subsets such that each phase subset comprises two different phase values and all the phase values are different, and with corresponding relation between trellis encoding output and phase subsets and that between parallel data streams obtained after serial-to-parallel conversion and phase values in the phase subset,
   the apparatus comprising a transmitter with a data receiving module, a nested trellis encoding module and a codeword processing module, wherein,

the data receiving module is used to receive serial data stream, perform a serial-to-parallel conversion for the input serial data stream, obtain 4 parallel data streams, partition the 4 parallel data streams into 2 groups and transmit them to the nested trellis encoding module;

the nested trellis encoding module is used to receive the two groups, perform trellis encoding for one group and select one basic codeword subset from all basic codeword subsets according to the encoding output and the preset corresponding relation; perform trellis encoding for one data stream in the other group, select one phase subset from all phase subsets according to the encoding output and the preset corresponding relation, and select a phase value from the selected phase subset according to another data stream in the other group and the preset corresponding relation; and transmit the selected basic codeword subset and phase value to the codeword processing module;

the codeword processing module is used to rotate the codeword in the received basic codeword subset by the received phase value and obtain and transmit an output codeword to a data receive-side.

**10.** The apparatus according to claim 9, wherein the nested trellis encoding module comprises an outer trellis encoding module and an inner trellis encoding module;

the outer trellis encoding module is used to receive one group from the data receiving module, perform the trellis encoding for the group, select one basic codeword subset from all the basic codeword subsets according to the trellis encoding output and the preset corresponding relation and output the selected basic codeword subset to the codeword processing module;

the inner trellis encoding module is used to receive the other group from the data receiving module, perform the trellis encoding for one data stream in the other group, select one phase subset from all phase subsets according to the trellis encoding output and the preset corresponding relation, then select a phase value from the selected phase subset according to another data stream in the other group and the preset corresponding relation, and transmit the selected phase value to the codeword processing module.

**11.** A data transmission method, comprising

pre-setting a 4-value phase set;

pre-setting more than one codeword set such that each codeword set comprises 256 codewords, all the codewords are different from each other and each codeword set can be partitioned into different basic codeword subsets, pre-setting corresponding relation between the codeword sets and trellis encoding output, that between the basic subsets obtained after the codeword set partition and the trellis encoding output and that between parallel data streams obtained after serial-to-parallel conversion and basic codewords in the basic codeword subsets;

during the data transmission, a data transmit-side performing a serial-to-parallel conversion for input serial date stream and obtaining 8 parallel data streams in which one data stream is considered as a first group and the other 7 data streams are considered as a second group;

performing trellis encoding for the first group and selecting one from all the codeword sets as current transmission codeword set according to the trellis encoding output and the preset corresponding relation; performing trellis encoding for two data streams in the second group, selecting one basic codeword subset from all the basic codeword subsets partitioned from the selected codeword set according to the trellis encoding output and the preset corresponding relation; selecting one basic codeword from the selected codeword subset according to three data streams in the remaining five in the second group and the preset corresponding relation; selecting one phase from the preset 4-value phase set according to last remaining two data streams in the second group and the preset corresponding relation;

rotating the selected basic codeword by the selected phase, obtaining and transmitting a output codeword to the data receive-side.

**12.** The method according to claim 11, wherein the 4-value phase set is $\{0, \pi/2, \pi, 3\pi/2\}$.

**13.** The method according to claim 11, wherein pre-setting more than one codeword set comprises pre-setting 4 codeword sets.

**14.** The method according to claim 13, wherein the preset codeword sets are acquired according to the following two formulae:

$$\text{codeword} = \{c_1, \overline{c_2}, c_3, c_4, c_5, c_6, \overline{c_7}, c_8\}$$
$$= e^{j \times phase} \{e^{j(\phi1+\phi2+\phi3)}, e^{j(\phi2+\phi3)}, e^{j(\phi1+\phi3)}, -e^{j(\phi3)}, e^{j(\phi1+\phi2)},\ e^{j(\phi2)},\ -e^{j(\phi1)},\ 1\}$$

$$G_0 \;=\; \{c_1 \quad c_2 \quad c_3 \quad c_4 \quad c_5 \quad c_6 \quad c_7 \quad c_8\}$$

$$G_3 \;=\; \{c_1 \quad c_2 \quad c_3 \quad -c_4 \quad c_5 \quad -c_6 \quad -c_7 \quad -c_8\}$$

$$G_1 \;=\; \{c_1 \quad c_2 \quad c_3 \quad -c_4 \quad c_5 \quad c_6 \quad -c_7 \quad c_8\}$$

$$G_2 \;=\; \{c_1 \quad c_2 \quad c_3 \quad c_4 \quad c_5 \quad -c_6 \quad c_7 \quad -c_8\},$$

wherein $\phi 1$, $\phi 2$, $\phi 3$, *phase* are input parameters.

**15.** The method according to claim 11, wherein the method further comprises:

at the data receive-side, trellises of the codeword and the phase being equivalent as a virtual trellis and detecting received codewords according to Viterbi algorithm based on the equivalent virtual trellis, wherein states in the equivalent virtual trellis can represent combination of all the states of the trellises of the codeword and the phase and branches in the equivalent virtual trellis can represent all stat transitions of the trellises of the codeword and the phase.

**16.** The method according to claim 15, wherein the detection step comprises:

computing and obtaining branch measurements of all the branches in the equivalent virtual trellis; and the equivalence and detection step further comprises: identifying 1024 branches to be computed in the equivalent virtual trellis, only computing the measurements of the 1024 branches, and then obtaining measurements of the other branches according to the measurements of the 1024 branches.

**17.** A data transmission apparatus configured with a 4-value phase set and more than one codeword set such that each codeword set comprises 256 codewords, all the codewords are different from each other and each set can be partitioned into different basic codeword subsets, with corresponding relation between the codeword sets and trellis encoding output, and with corresponding relation between the basic subsets after the codeword set partition and the trellis encoding output and that between parallel data streams obtained after serial-to-parallel conversion and basic codewords in the basic codeword subsets;
the apparatus comprising a transmitter with a data receiving module, a nested trellis encoding module and a codeword processing module, wherein,
the data receiving module is used to receive serial data stream, perform a serial-to-parallel conversion for input serial data stream and obtain 8 parallel data streams in which one data stream is considered as a first group and the other 7 data streams are considered as a second group, and transmit them to the nested trellis encoding module;
the nested trellis encoding module is used to receive the two groups of data, perform trellis encoding for the first group and select one from all the codeword sets as the current transmission codeword set according to the trellis encoding output and the preset corresponding relation; perform trellis encoding for two data streams in the second group, select one basic codeword subset from all the basic codeword subsets partitioned from the selected codeword set according to the trellis encoding output and the preset corresponding relation; select one basic codeword from the selected codeword subset according to three data streams in the remaining five in the second group and the preset corresponding relation; select one phase from the preset 4-value phase set according to the last remaining two data streams in the second group and the preset corresponding relation; and transmit the selected basic codeword and the phase to the codeword processing module;
the codeword processing module is used to rotate the received codeword by the received phase value and obtain and transmit an output codeword to a data receive-side.

**18.** The apparatus according to claim 17, wherein the nested trellis encoding module comprises an outer trellis encoding module and an inner trellis encoding module;
the outer trellis encoding module is used to receive the first group from the data receiving module, select one codeword set from all the codeword sets as the current transmission codeword set and transmit the selected codeword set to the inner trellis encoding module;

the inner trellis encoding module is used to receive the second group from the data receiving module and the codeword set from the outer trellis encoding module; perform the trellis encoding for two data streams in the second group, select one basic codeword subset from all the basic codeword subsets partitioned from the selected codeword set according to the trellis encoding output and the preset corresponding relation; select one basic codeword from the selected codeword subset according to three data streams in the remaining five in the second group and the preset corresponding relation; select one phase from the preset 4-value phase set according to the last remaining two data streams in the second group and the preset corresponding relation; and output the selected phase and basic codeword to the codeword processing module.

EP 1 871 063 A2

Fig. 1

Fig. 2

Fig. 3

Fig. 4

Fig. 5

a                    b

Fig. 6

Fig. 7

Fig. 8

Correlation matrix

One of the subsets

> 8subsets

> Each subset only has one codeword

Total 8

Codeword set partitioning

**Fig. 9**

Phase set partitioning

$\left\{0, \frac{\pi}{2}, \pi, \frac{3\pi}{2}\right\}$ Enlarge $\left\{0, \frac{\pi}{4}, \frac{\pi}{2}, \frac{3\pi}{4}, \pi, \frac{5\pi}{4}, \frac{3\pi}{2}, \frac{7\pi}{4}\right\}$

> 4 subsets

> Each subset has two phases with difference π

**Fig. 10**

Fig. 11

Fig. 12A

Fig. 12B

Fig. 13

Fig. 14

Inner code trellis

Fig. 15A

Outer code trellis

Fig. 15B

Fig. 16

Fig. 17

Fig. 18

Fig. 19

Fig. 20

Fig. 21

26